# EUROPEAN PATENT APPLICATION

(11) **EP 3 318 444 A1**
(43) Date of publication of application: **09.05.2018**
(21) Application number: 16306458.7
(22) Date of filing: 07.11.2016
(51) Int. Cl.: B60M 5/00, F16B 2/10, H01R 4/64

(54) **RAIL CLAMP**

(71) Applicant: Dubuis et Cie, 41000 Villebarrou (FR)
(72) Inventor: RACAULT, André, 41000 SAINT SULPICE DE POMMERAY (FR)
(74) Representative: SBD IPAdmin

(57) **Abstract**

The present invention relates to a rail clamp (10) for electrically connecting an electric cable to a foot of a railway rail, the rail clamp (10) comprising:
upper and lower members (20, 50) each having a gripping end(22, 52), a locking end (24, 54) and a major pivot point (16) therebetween, the upper and lower members (20, 50) being interconnected at their pivot points (16);
a locking mechanism (100) provided at the locking ends (24, 54) of the upper and lower members (20, 50) and configured to control the angle between the upper and lower members (20, 50);
upper and lower grippers (32, 82) provided at the gripping ends (22, 52) of the upper and lower members (20, 50) and configured to clamp against opposed surfaces of the foot of the railway rail.

## Description

The present invention relates to apparatus for connecting electrical cables to the rails of railway tracks and more particularly to rail clamps which may attach to the foot of such rails.

It is often desirable or even necessary to attach electrical cables to the rails of railway tracks, particularly since those rails provide a convenient means of transmitting electrical energy to electrically driven trains, transmitting data about the tracks or even earthing other electrical systems commonly found on railways. For instance, nowadays all railways include various electrical systems, such as signalling systems for indicating commands to the drivers, points systems for adjusting the position of the rails, and overhead power systems for transmitting electrical energy to electrically driven trains via their pantographs. All such systems require earthing, temporarily or permanently, and the track provides a good, convenient means of doing so.

Railway tracks commonly include at least two rails. The precise size and shape of these vary between different railways, but usually they take the form of an I-beam in that they include a web having a foot at its lower end and a head at its upper end. The wheels of the train roll along the head and the web transmits the loads to the foot where it is dissipated to the very many sleepers on which the rails rest. The foot is such a convenient location for rail clamps since the clamps are unlikely to obstruct the wheels rolling over the rail head and, between two neighbouring sleepers, there is usually ample clearance between the foot and the ground.

Rail clamps are known for the purpose of electrically connecting cables to the rails, but they are not without shortcomings. For instance, some rail clamps have grippers which may be rotated in an attempt to align the gripper's teeth with the profile of the rail's foot. However, such rail clamps are subject to enormous operator error in that operators may omit to rotate the gripper in order to align the teeth and the foot, thus resulting in any other portion of the gripper, besides the teeth, engaging the rail's foot.

Furthermore, some rail clamps having upper and lower grippers provided with teeth which are inappropriately configured for achieving sufficient grip on the foot of the rail.

The present invention attempts to address these, and other, shortcoming associated with known rail clamps.

According to one aspect of the present invention, there is provided a rail clamp for electrically connecting an electric cable to a foot of a railway rail, the rail clamp comprising:
upper and lower members each having a gripping end, a locking end and a major pivot point
therebetween, the upper and lower members being interconnected at their pivot points;
a locking mechanism provided at the locking ends of the upper and lower members and configured to control the angle between the upper and lower members;
upper and lower grippers provided at the gripping ends of the upper and lower members and configured to clamp against opposed surfaces of the foot of the railway rail.

In a preferred embodiment, the upper gripper is configured to pivot relative to the upper member about a minor pivot axis. Advantageously, the minor pivot axis about which the upper gripper and upper member pivot is substantially parallel to the major pivot axis about which the upper and lower members pivot. Furthermore, the upper gripper and upper member are configured to pivot within a pre-defined angular range having upper and lower limits. The predefined angular range may be a maximum of 20 degrees and more preferably the pre-defined angular range may be a maximum of 12.5 degrees. The angular range enables the rail clamp to adapt to different rail profiles.

Furthermore, the upper gripper and upper member may include abutment means which inter-engage when the upper gripper reaches the upper and lower limits to restrict pivoting movement outside the predefined angular range. In one arrangement, the abutment means comprises an upper abutment configured to engage the upper member when the upper gripper reaches its upper limit. Similarly, the abutment means may also include a lower abutment configured to engage the upper member when the upper gripper reaches its lower limit.

One of the upper gripper and the upper member may include a recess into which the other of the upper gripper and the upper member may locate. In a preferred embodiment, the upper member includes a recess in the centre of its front end and the upper member is disposed within that recess.

Advantageously the upper gripper includes at least one elongate tooth. In a preferred embodiment the upper gripper includes four elongate teeth arranged one behind the other. Furthermore, the or each elongate tooth may be arranged on the upper gripper such that the length of each elongate tooth extends substantially parallel to the minor pivot axis. Preferably the or each elongate tooth has forward and rearward faces converging towards a clamping edge and most preferably that or each clamping edge is rectilinear and extends substantially along the entire length of the tooth.

The upper gripper may include a plurality of elongate teeth arranged in a row, laterally one in front of the other. The clamping edges of the elongate teeth may collectively define a notional clamping surface which may be substantially planar or curved. In a preferred arrangement the notional clamping surface may have a profile corresponding substantially to the profile of the foot of the rail to which the rail clamp is to be attached. In one embodiment, the teeth of the upper gripper are arranged to define a curved notional clamping surface having a radius of curvature lying in the range of about 60 to 80mm and more preferably about 70mm.

The notional clamping surface (be that a planar notional clamping surface or a plane running tangential to a curved notional clamping surface) may be angled relative to the lower gripper. The angle between the notional clamping surface and the lower gripper may vary according to the angle between (i) the upper and lower members and (ii) the angle between the upper gripper and the upper member. In a preferred arrangement, the rail clamp may be configured such that the angle between the notional clamping surface and the lower gripper may be set at -3 degrees, such that the front most teeth of the upper and lower grippers are closer together than the rear most teeth of the upper and lower grippers. Furthermore, the rail clamp may be configured such that the angle between the notional clamping surface and the lower gripper may be set at +19 degrees, such that the rear most teeth of the upper and lower grippers are closer together than the front most teeth of the upper and lower grippers.

Preferably the plurality of teeth may be spaced laterally apart to define a saw tooth profile. Moreover, the forward most elongate teeth may be shallower than the rearward most elongate teeth.

In one arrangement, each tooth has a central plane disposed midway between the front and rear faces and intersecting the clamping edge, the central plane being angled relative to the notional clamping surface (be that a planar notional clamping surface or a plane running tangential to a curved notional clamping surface).

Advantageously the lower gripper may have an array of pointed teeth and even more advantageously, the points of those teeth all lie in a single plane so as to engage the typically planar underside of the foot of the rail.

Further, at least one of the upper and lower members may include at least one cable connection point extending laterally therefrom. It is preferable for the rail clamp to include two cable connection points such that each side of the rail clamp may be furnished with a cable connection point. This more easily allows two cables to connect to the rail clamp or, when only one cable is to be connected, allows the operator to select the most accessible cable connection point. More preferably, the or each cable connection point is provided on the lower member such that the cable connected to said cable connection point may remain as low as possible so as to reduce hazards.

By way of example only, one embodiment of the invention will now be described in detail with reference being made to the accompanying drawing, in which:
**Figure 1** shows a top perspective view of the rail clamp according to the invention;
**Figure 2** shows a bottom perspective view of the rail clamp of Figure 1;
**Figure 3** shows a top view of the rail clamp of figures 1 and 2;
**Figure 4** shows a bottom view of the rail clamp shown in Figures 1 to 3;
**Figure 5** shows a side view of the rail clamp shown in figures 1 to 4;
**Figure 6** shows a front view of the rail clamp shown in Figures 1 to 5;
**Figure 7** shows a rear view of the rail clamp shown in Figures 1 to 6;
**Figure 8** shows a rear view of the rail clamp attached to the foot of a rail.
**Figure 9** shows a perspective of the rail clamp attached to the foot of the rail;
**Figure 10** shows a cross-sectional view of the rail clamp attached to the foot of a rail, taken along the line AA shown in Figure 8;

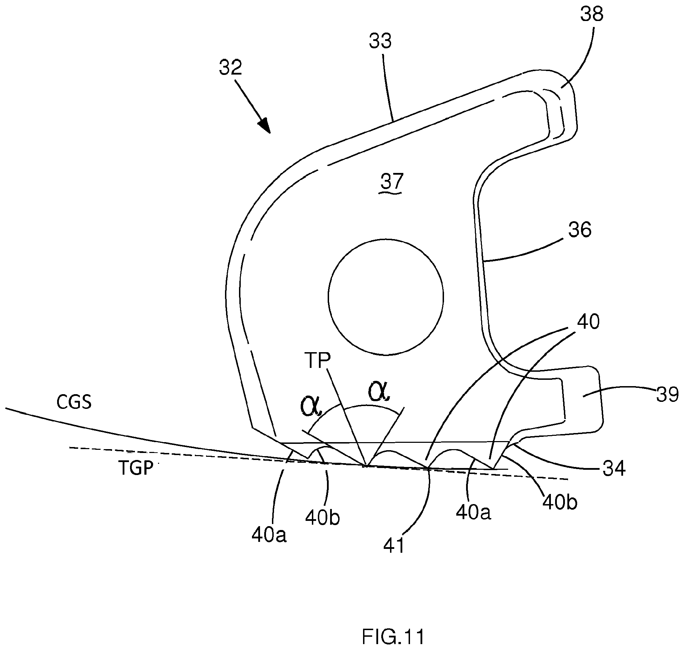

**Figure 11** shows a side view of the upper gripper of the rail clamp shown in Figures 1 to 9; and
**Figure 12** is a perspective view of a tool-free rail clamp which includes a locking mechanism and a tommy bar to adjust the locking mechanism.

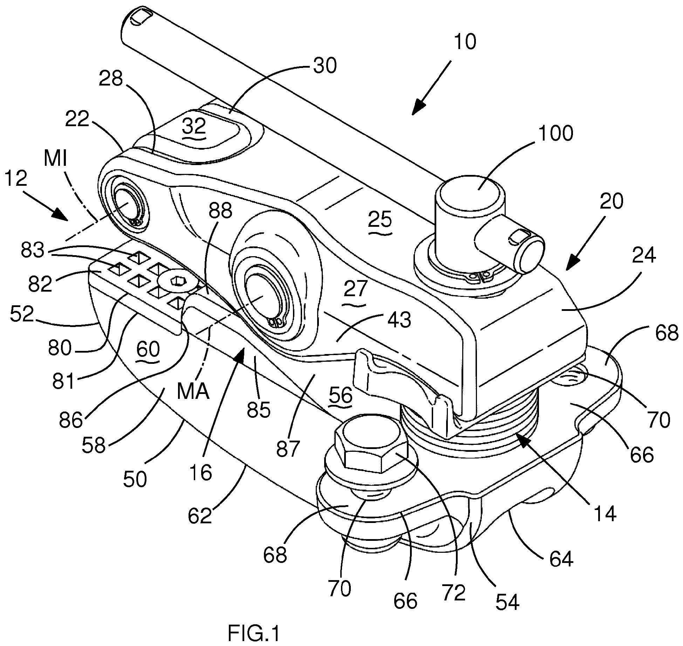

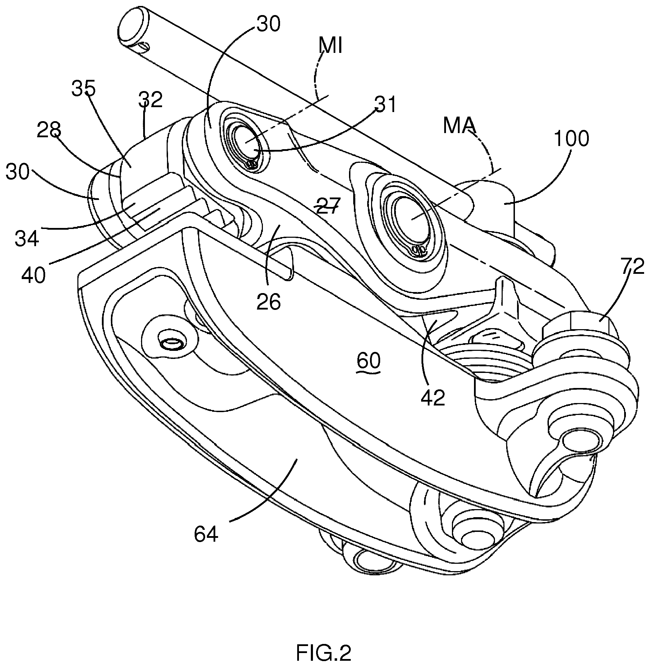

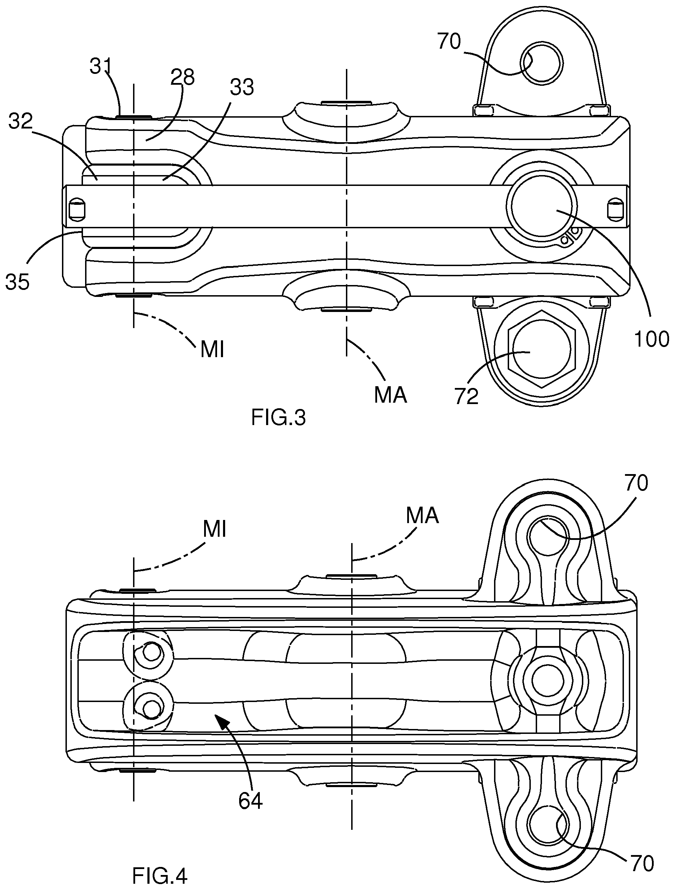

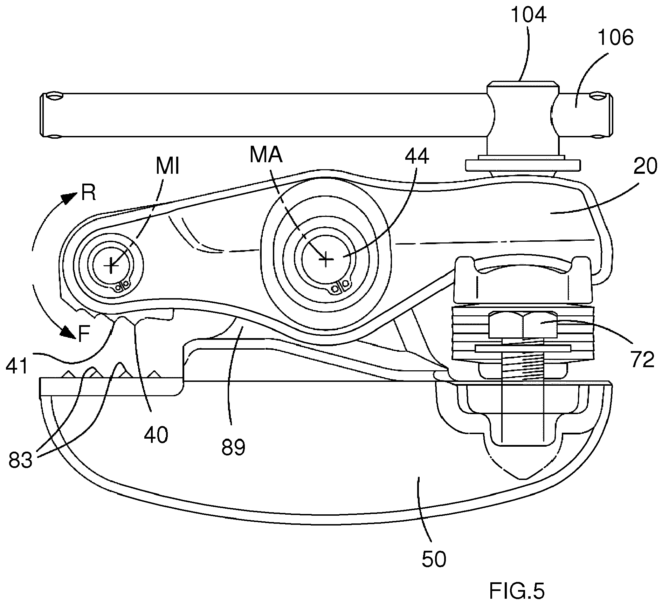

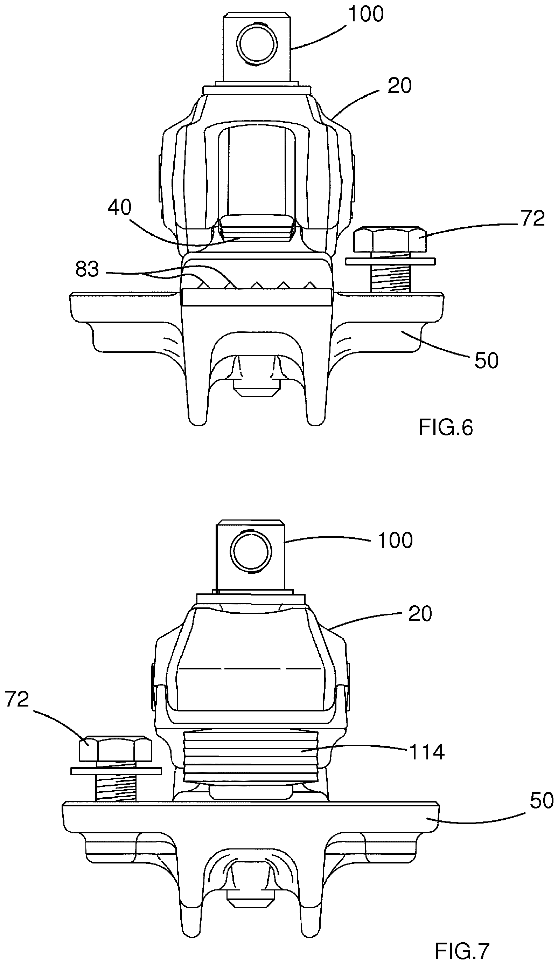

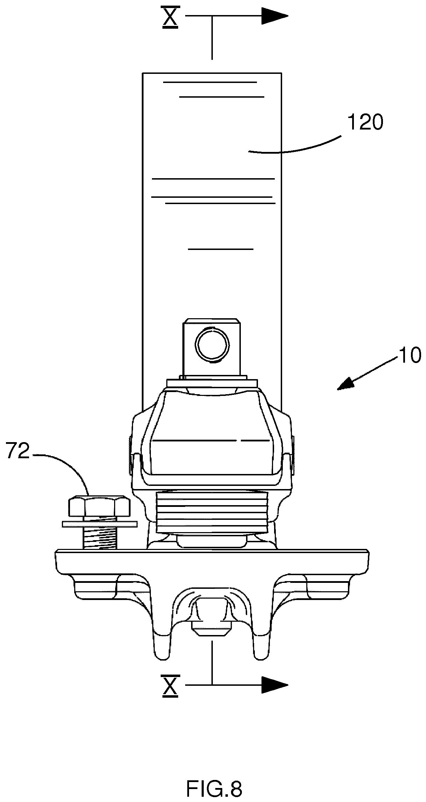

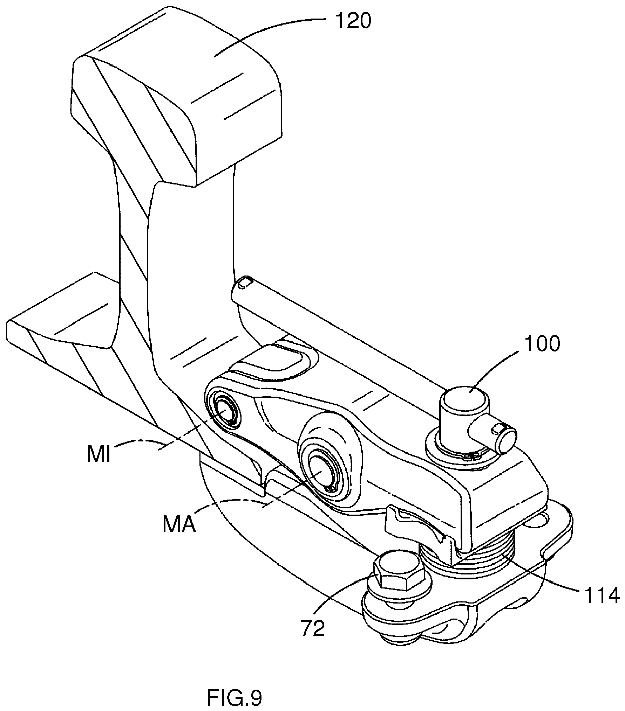

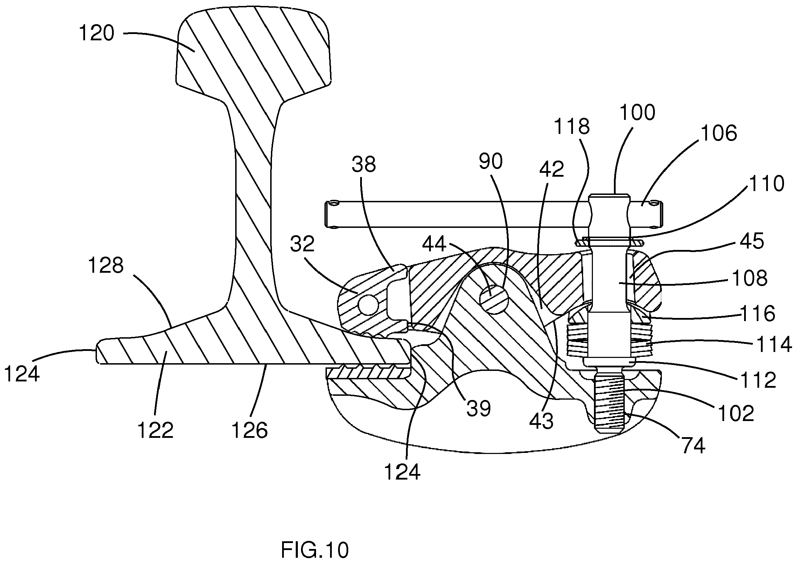

Referring to initially to Figures 1 to 7, there is shown a rail clamp 10 for electrically connecting an electric cable (not shown) to the rail (see Figs 8-10) of a rail way track. The rail clamp 10 includes an upper member 20 and a lower member 50. Both the upper and lower members 20,50 have front ends 22,52 defining gripping means 12 and rear ends 24,54 defining locking means 14. The upper and lower members 20,50 include pivot means 16 between the front and rear ends 22,24,52,54 and by which the upper and lower members 20,50 may be interconnected and permitted to pivot relative to each other about a major pivot axis MA.

The lower member 50 includes front and rear ends 52,54, a top 56, a bottom 58 and two opposed side faces 60. The front end 52, the bottom 58 and the rear end 54 merge to form a continuous curved surface and the side faces 60 each have an arcuate lower edge 62 at which they interface with the continuous curved surface. The lower member 50 includes a channel 64 formed along the length of the bottom 58 such that the front and rear ends 52,54 are generally U-shaped.

The lower member 50 includes mounting points 66 provided on opposed side faces 60. Each mounting point 66 comprises a flange extending laterally from a respective side face 60 and having a mounting surface 68 generally planar with the top surface 56. Each flange includes a threaded hole 70 for receiving a screw 72 and a cable (not shown) may be clamped firmly between the mounting surface 68 and the head of the screw 72. A bore 74 extends between the top and the bottom of the lower member at a location substantially midway between the mounting points 66 disposed near the rear end 54. The bore 74 is threaded so as to receive a locking bolt 100 of the locking means 14, to be discuss further below.

The lower member 50 is furnished with a lower gripper 80, which is fastened by bolts to a bed 81 defined on the top 56 and towards the front end 52. The lower gripper 80 comprises a generally rectangular plate 82 having a lower surface configured to locate on the bed 81 and an upper surface provided with an array of teeth 83. The array of teeth 83 comprises four rows of four teeth and each tooth in the array is generally pyramidal and spaced from a neighbouring tooth. The teeth 83 extend generally upwardly and their position is fixed relative to the lower member 50.

A ramp 85 is provided on the top 56 and arranged substantially midway between the front and rear ends 52,54. The ramp 85 is profiled such that its foremost portion rises from the bed 81 in a step-like fashion to define a shoulder 86 and the rear most portion 87 slopes downwardly towards the mounting surfaces 68 of the mounting points 66. The intermediate portion of the ramp 85 has an upper surface 88 lying substantially parallel to the bed 81. The intermediate portion includes a hump 89 which is narrower than the ramp 85 so as to be inset from the sides 60. A pivot hole 90 extends through the hump 89 from one side face to another to define the major pivot axis MA of the rail clamp 10.

The upper member 20 includes front and rear ends 22,24, a top 25 and a bottom 26 and two opposing side faces 27. The side faces 27 have substantially similar shapes in that they each have a tall bulbous central portion which narrows to a rounded front portion and a rectangular rear portion.

The front end 22 of the upper member 20 is provided with a central recess 28 extending between the top and bottom 25,26 so as to define a fork 29. The fork 29 includes a pair of prongs 30 provided with coaxial bores in which there is supported an axle 31 defining a minor pivot axis MI. The upper member 20 is furnished with an upper gripper 32 disposed within the recess 28 so as to be enclosed by the two prongs 30 of the fork 29. The upper gripper 32 has upper and lower surfaces 33,34, front and rear surfaces 35,36 and two side faces 37. The axle 31 extends through a bore (not shown) extending between the two side faces 37 so as to carry the upper gripper 32 and allow pivoting movement of said upper gripper 32 relative to the upper member 20 about the minor pivot axis MI. The rear surface 36 of the upper gripper 32 includes upper and lower abutments 38,39 arranged to restrict the pivoting movement of the upper gripper 32 within a predefined angular range of about 12 degrees. For instance, when the upper gripper 32 is pivoted rearwardly (in the direction of arrow R) and eventually reaches the upper limit of the predefined angular range, the upper abutment 38 is configured to abut the upper member 20 to restrict further movement in the rearward direction R. Similarly, when the upper gripper 32 is pivoted forwardly (in the direction of arrow F) and eventually reaches the lower limit of the pre-defined angular range, the lower abutment 39 is configured to abut the upper member 20 to restrict further movement in the forward direction F.

The lower surface 34 of the upper gripper 32 is provided with a row of teeth 40, the front most tooth 40 in the row being proximal to the front face 35 of the upper gripper 32 and the rear most tooth in the row being proximal to the rear face 36 of the upper gripper 32. Each tooth 40 is elongate so as to extend substantially between the two side faces 37 of the upper gripper 32. Furthermore, each tooth 40 has forward and rearward tooth faces 40a,40b which converge towards a gripping edge 41. The gripping edges 41 of the elongate teeth 40 collectively define a curved gripping surface CGS having an orientation which varies according to the angular positon of the upper gripper 32 within its pre-defined angular range, but also the angular position of the upper member 20 relative to the lower member 50. The orientation of the curved gripping surface CGS can be approximated by a tangential gripping plane TGP which contacts the curved gripping surface CGS midway between the two middle elongate teeth 40. The angle between the tangential gripping plane TGP and the plane defined by the pointed teeth of the lower member 50 varies between -3 degrees and +19 degrees. An angle of -3 degrees is achieved when the upper and lower members are arranged such that the gripping means 12 converge and the lower abutment 39 engages the upper member 20. An angle of +19 degrees is achieved when the upper and lower members 20,50 are arranged such that the gripping means 12 diverge and the upper abutment 38 engages the upper member 20.

Each tooth 40 is angled such that a tooth plane TP commencing at its gripping edge 41 and extending midway between its forward and rearward tooth faces 40a,40b is inclined relative to the tangential gripping plane TGP.

A hollow 42 formed approximately midway along the bottom 26 of the upper member 20 is configured to accommodate the hump 89 of the lower member 50. The hollow 42 has a similar shape to the hump 89 in so far as the side faces are generally planar and the front and fear faces merge to define an arcuate profile. Furthermore, the width of the hollow 42 is slightly larger than that of the hump 89 and the length of the hollow 42 is significantly larger than that of the hump 89 so as to allow the hump 89 to pivot forwards and backwards inside the hollow 42. Two skirts 43 depend downwardly from the upper member 20 on opposed sides of the hollow 42 and a major pivot pin 44 extends through a hole formed in each of those skirts 43, and also through the hole 90 formed through the hump 89.

A through hole 45 is formed through the upper member 20 so as to extend through the top and bottom surfaces 25,26 proximal the rear end 24. The through hole 45 forms part of the locking means 14 insofar as it accommodates the locking bolt 100 which threadingly engages the threaded hole 74 in the lower member 50, as noted above. The locking bolt 100 includes a lower portion 102 which is threaded, an upper portion 104 which includes a through hole for receiving a tommy bar 106, and an intermediate portion 108 which is delineated by radially extending upper and lower flanges 110,112. The intermediate portion 108 includes a stack of spring washers 114 seated on the lower flange 112 and a lower bearing plate 116 supported on the stack of spring washers 114. The lower bearing plate 116 has a convex upper surface and the bottom of the upper member 20, in the vicinity of the through hole 45, has a concaved surface which cooperates with said convex surface. An upper bearing plate 118 is disposed on the locking bolt 100 and trapped between the upper radial flange 110 and the top 25 of the upper member 20. The diameter of the through hole 45 is significantly larger than the diameter of the intermediate portion 108 of the locking bolt 100 in order to allow sufficient clearance to enable the upper member 20 to pivot relative to the lower member 50 and the locking bolt 100. The purpose of trapping the spring washers 114, bearing plates 116,118 and upper member 20 between the upper and lower flanges 110,112 of the locking bolt 100 is to restrict relative axial movement of the locking bolt 100 and the upper member 20 while permitting relative pivoting movement of those parts.

In use, the gripping means 12 of the rail clamp 10 may be opened by rotating the tommy bar 106 to drive the lower end 102 of the locking bolt 100 further into the threaded through hole 74 of the lower member 50. This causes the rear ends 24,54 of the upper and lower members 20,50 to converge and the front ends 22,52 of the upper and lower members 20 ,50 to diverge, thus opening the gripping means 12. The rail clamp 10 may then be presented to the rail 120 such that the foot 122 locates between the upper and lower grippers 32,82 and more particularly the flank 124 of the foot 122 bears against the shoulder 86 of the ramp 85. The tommy bar 106 may then be rotated so as to commence withdrawal of the locking bolt 100 from the threaded through hole 74. This causes the rear ends 24,54 of the upper and lower members 20,50 to open and the front ends 22,52 of the upper and lower members 20,50 to close. As the front ends 22,52 close, the tips of the teeth 83 of the lower gripper 82 engage the lower face 126 of the foot 122 and the gripping edges 41 of the teeth 40 of the upper gripper 32 engage the upper face 128 of the foot 122. At this time, the upper gripper 32 pivots about the minor pivot axis MI such that the curved gripping surface CGS aligns with the upper face 128 of the foot 122 and the clamping edges 41 bite onto the foot 122. In this way, the rail clamp 10 is clamped firmly onto the foot 122 of the rail 120.

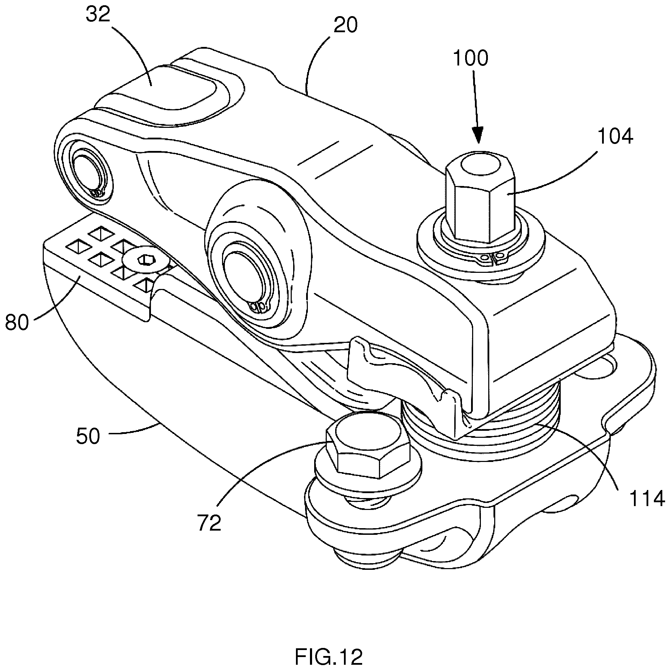

The modified rail clamp of Figure 12 includes a slightly different locking bolt in that the upper portion 104 includes no aperture and no tommy bar. Instead, the upper portion 104 is polygonal and the locking bolt 100 may be driven by a user in possession of a tool suitable for engaging that polygonal upper portion.

## Claims

1. A rail clamp for electrically connecting an electric cable to a foot of a railway rail, the rail clamp comprising:
upper and lower members each having a gripping end, a locking end and a major pivot point
therebetween, the upper and lower members being interconnected at their pivot points;
a locking mechanism provided at the locking ends of the upper and lower members and configured to control the angle between the upper and lower members;
upper and lower grippers provided at the gripping ends of the upper and lower members and configured to clamp against opposed surfaces of the foot of the railway rail.

2. A rail clamp as claimed in claim 1, wherein the upper gripper is pivotably connected to the upper member and configured to pivot relative to the upper member about a minor pivot axis and within a pre-defined angular range having upper and lower limits.

3. A rail clamp as claimed in claim 1, wherein the upper gripper and upper member include abutment means which inter-engage when the upper gripper reaches the upper and lower limits to restrict pivoting movement outside the predefined angular range.

4. A rail clamp as claimed in claim 3, wherein the abutment means comprise an upper abutment configured to engage the upper member when the upper gripper reaches its upper limit and a lower abutment configured to engage the upper member when the upper gripper reaches its lower limit.

5. A rail clamp as claimed in any of claims 2 to 4, wherein the minor pivot axis and the major pivot axis are substantially parallel.

6. A rail clamp as claimed in any preceding claim, wherein the gripping end of the upper member is provided with a recess in which the upper gripper is located.

7. A rail clamp as claimed in any preceding claim, wherein the upper gripper includes at least one elongate tooth.

8. A rail clamp as claimed in claim 7, wherein the or each tooth extends substantially parallel to the minor pivot axis.

9. A rail clamp as claimed in claim 7 or claim 8, wherein the or each elongate tooth has forward and rearward faces converging towards a clamping edge.

10. A rail clamp as claimed in any of claims 7 to 9, wherein the upper gripper includes a plurality of elongate teeth arranged in a row so as to be spaced laterally apart to define a saw tooth profile.

11. A rail clamp as claimed in any of claims 7 to 10, wherein the forward most elongate teeth are shallower than the rearward most elongate teeth.

12. a rail clamp as claimed in claim 9 or any of claims 10 to 11 when dependant on claim 9, wherein the clamping edges of the elongate teeth define a notional clamping surface.

13. A rail clamp as claimed in claim 9 or any of claims 10 to 12 when dependent on claim 9, wherein each tooth has a central plane disposed midway between the front and rear faces and intersecting the clamping edge, the central plane being angled relative to the notional clamping surface.

14. A rail clamp as claimed in any preceding claim, wherein the lower gripper has an array of pointed teeth.

15. A rail clamp as claimed in any preceding claim, wherein at least one of the upper and lower members includes at least one cable connection point extending laterally therefrom.
